# FASCICULE DE BREVET EUROPEEN

(11) **EP 0 870 645 B1**
(45) Date de publication et mention de la délivrance du brevet: **05.03.2003**
(21) Numéro de dépôt: 98400812.8
(22) Date de dépôt: 06.04.1998
(51) Int. Cl.: B60Q 1/26

(54) **Fixation de porte-lampes de feux de signalisation**
Befestigungsvorrichtung für einen Lampenträger einer Signalleuchte
Fixation device for a signalling light lampholder

(30) Priorité: 07.04.1997 FR 9704204
(43) Date de publication de la demande: 14.10.1998
(73) Titulaire: VALEO VISION, 93000 Bobigny (FR)
(72) Inventeur: Duplessy, Régis, 89100 Paron (FR)
(74) Mandataire: Le Forestier, Eric

(56) Documents cités:
- EP-A- 0 026 402
- DE-A- 2 001 708
- DE-C- 4 202 907

## Description

La présente invention est relative à la fixation des porte-lampes de feux de signalisation.

Classiquement, un porte-lampes présente une ou plusieurs pattes de verrouillage élastiques pour sa fixation sur un socle de feu de signalisation.

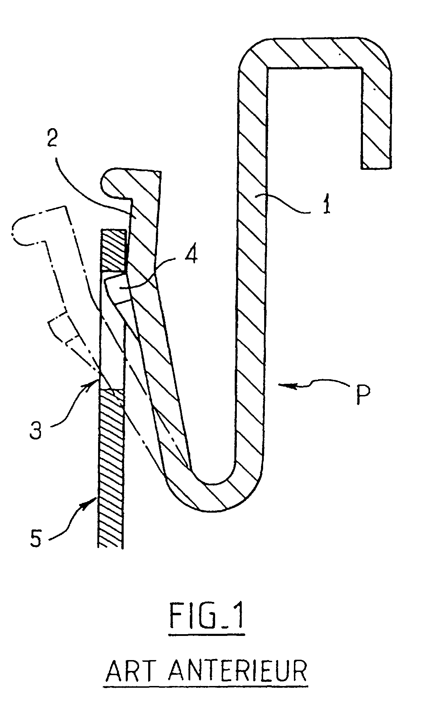

Un exemple de patte de verrouillage a été illustré sur la figure 1. Dans cet exemple, la patte de verrouillage - référencée par 2 - est un retour élastique en U, qui prolonge un rebord 1 du porte-lampes - référencé par P. Cette patte 2 porte un ergot 3 qui est destiné à coopérer avec un évidement 4 complémentaire que présente un socle S pour fixer le porte-lampes P sur ledit socle S. Les deux positions représentées pour la patte 2 correspondent l'une à la position que prend théoriquement la patte 2 lorsqu'elle est au repos, l'autre à la position de cette patte 2 lorsqu'elle est sollicitée élastiquement par le socle S et que l'ergot 3 est engagé dans l'évidement 4.

Toutefois, on a constaté que lors de l'étuvage des feux équipés de leurs porte-lampes, les pattes de fixation 2 ont tendance à se refermer, de sorte que la force de rappel exercée par une telle patte 2 pour maintenir l'ergot 3 dans l'évidement 4 se relâche. Après cette opération d'étuvage, la position de repos de la patte 2 est en effet peu différente de celle que ladite patte 2 prend lorsque le porte-lampes P est en place sur le socle S. Le porte-lampes P n'est donc plus correctement maintenu par rapport au socle S.

Un but de l'invention est de pallier cet inconvénient.

On connaît déjà par le document DE 42 02 907 une structure de feu de signalisation de véhicule dans laquelle il est prévu des moyens pour la fixation d'un socle sur une glace. Ces moyens comportent notamment une patte de fixation.

L'invention propose quant à elle un porte-lampes de feu de signalisation de véhicule automobile comportant une patte de fixation élastique destinée à coopérer avec des moyens complémentaires d'un socle, caractérisé en ce qu'il comporte, entre la patte de fixation et une paroi rigide en regard de cette patte, au moins un élément intermédiaire présentant une raideur suffisante pour s'opposer à la fermeture de ladite patte lors de l'étuvage du feu et l'orientation et le dimensionnement de cet élément intermédiaire sont choisis pour que sa raideur soit suffisamment faible afin qu'il se laisse plier lors du montage du porte-lampes sur le socle.

Cet élément intermédiaire est avantageusement une nervure qui s'étend en saillie par rapport à la patte de fixation ou à la paroi en regard de celle-ci.

Préférentiellement, cette nervure s'étend en biais entre la patte de fixation et la paroi.

L'invention concerne également un feu de signalisation comportant un socle et un porte-lampes monté sur celui-ci, caractérisé en ce que le porte-lampes est du type précité.

D'autres caractéristiques et avantages de l'invention ressortiront encore de la description qui suit. Cette description est purement illustrative et non limitative. Elle doit être lue en regard des dessins annexés sur lesquels :
- la figure 1, déjà analysée, illustre, en représentation schématique en coupe, une patte de fixation d'un porte-lampes conforme à un art antérieur connu ;
- la figure 2 est une représentation schématique en coupe d'une patte de fixation d'un porte-lampes conforme à l'invention ;
- la figure 3 est une représentation schématique en vue de dessus d'un porte-lampes comportant une patte de fixation du type de celle illustrée sur la figure 2.

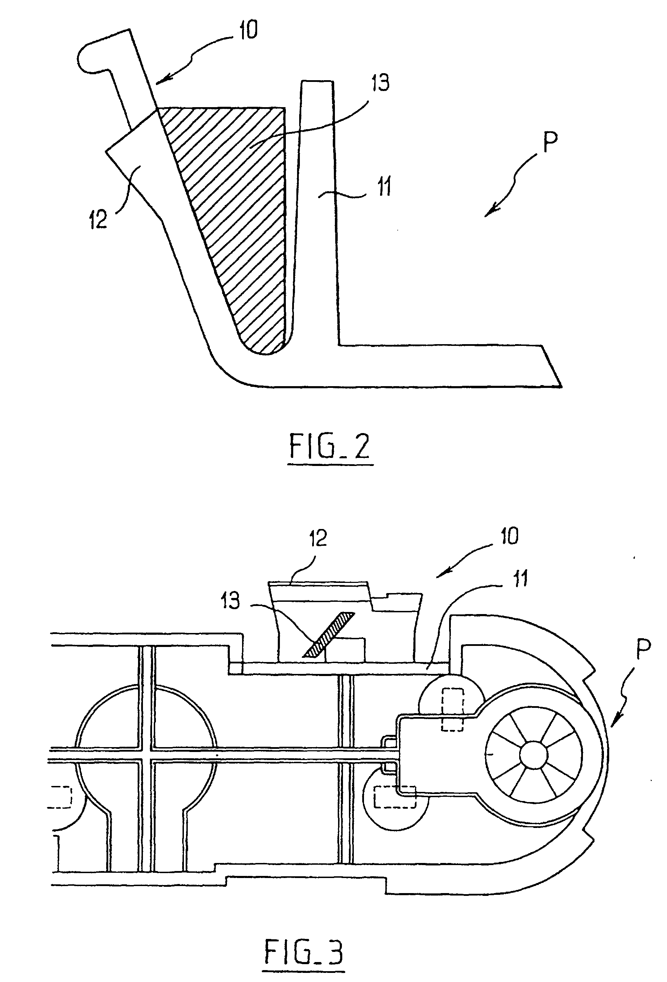

Le porte-lampes P représenté sur les figures 2 et 3 est un porte-lampes d'un type connu en soi qui comporte en outre une patte de fixation élastique 10 qui s'étend à partir d'un de ses bords.

Il comporte également une paroi rigide 11 qui s'étend en regard de la patte de fixation 10 et par rapport à laquelle ladite patte 10 se rapproche ou s'écarte lorsqu'elle est sollicitée élastiquement.

La patte de fixation 10 présente un ergot 12 destiné à coopérer avec un évidement complémentaire du socle sur lequel ledit porte-lampes P est monté.

Egalement, elle porte une nervure semi-rigide 13 qui s'étend en biais à partir de sa face qui est en regard de la paroi 11, en s'arrêtant en regard de ladite paroi sans y être rattachée.

Les dimensions de cette nervure 13 et l'angle que fait la direction selon laquelle elle s'étend par rapport à la normale à la face interne de la patte 10, sont choisis, en fonction du matériau dans lequel le porte-lampes P est moulé, de façon à conférer à ladite nervure une raideur qui est suffisante pour que lorsque lors de l'étuvage le côté libre de la nervure 13 vient en contact avec la paroi 11 du porte-lampes P, ladite nervure 13 résiste à l'effort de fermeture qui est généré par l'étuvage, et ce sans se plier.

Ainsi, la patte de fixation 10 reste dans une position stationnaire lors de l'étuvage. La force de rappel qu'elle exerce pour maintenir l'ergot 12 dans l'évidement complémentaire du socle est sensiblement identique avant et après l'étuvage.

Egalement, l'orientation et le dimensionnement de cette nervure 13 sont choisis pour que sa raideur soit suffisamment faible pour qu'un opérateur puisse aisément contraindre manuellement la patte élastique 10 en pliant ladite nervure, lors du montage du porte-lampes P sur le socle.

La nervure 13 participe ainsi, lors de l'opération de montage, au rappel de la patte de fixation 10 vers sa position de repos.

On notera également que cette nervure 13 augmente la tenue mécanique de la patte 10.

Le porte lampes P, la patte de fixation 10 et la nervure 13 sont réalisés par moulage.

D'autres variantes de réalisation de l'invention sont bien entendu envisageables.

En particulier, il pourrait être prévu d'autres types d'éléments intermédiaires qu'une nervure s'étendant entre la patte de fixation et une paroi rigide en regard de cette patte.

## Revendications

1. Porte-lampes de feu de signalisation de véhicule automobile comportant une patte de fixation élastique (10) destinée à coopérer avec des moyens complémentaires d'un socle, **caractérisé en ce qu'**il comporte, entre la patte de fixation (10) et une paroi rigide (11) en regard de cette patte (10), au moins un élément intermédiaire (13) présentant une raideur suffisante pour s'opposer à la fermeture de ladite patte (10) lors de l'étuvage du feu et l'orientation et le dimensionnement de cet élément intermédiaire (13) sont choisis pour que sa raideur soit suffisamment faible afin qu'il se laisse plier lors du montage du porte-lampes sur le socle.

2. Porte-lampes selon la revendication 1, **caractérisé en ce que** l'élément intermédiaire (13) est une nervure qui s'étend en saillie par rapport à la patte de fixation (10) ou la paroi (11) en regard de celle-ci.

3. Porte-lampes selon la revendication 2, **caractérisé en ce que** cette mervure (13) s'étend en biais entre la patte de fixation (10) ou la paroi (11) en regard de celle-ci.

4. Feu de signalisation comportant un socle et un porte-lampes monté sur celui-ci, **caractérisé en ce que** le porte-lampes (P) est du type selon l'une des revendication 1 à 3

## Patentansprüche

1. Lampenhalter für Kraftfahrzeugsignalleuchten, mit einer elastischen Befestigungsklammer (10), die dazu bestimmt ist, mit komplementären Mitteln eines Sockels zusammenzuwirken,
**dadurch gekennzeichnet, dass** er zwischen der Befestigungsklammer (10) und einer der Klammer gegenüberliegenden steifen Wand (11) wenigstens ein Zwischenteil (13) umfasst, das eine ausreichende Steifigkeit aufweist, um das Schließen der Klammer (10) beim Aushärten der Leuchte zu verhindern, wobei die Ausrichtung und Abmessung dieses Zwischenteils (13) so gewählt sind, dass seine Steifigkeit ausreichend gering ist, dass es sich beim Anbringen des Lampenhalters auf dem Sockel biegen lässt.

2. Lampenhalter nach Anspruch 1,
**dadurch gekennzeichnet, dass** das Zwischenteil (13) eine Rippe ist, die bezüglich der Befestigungsklammer (10) bzw. der der Befestigungsklammer gegenüberliegenden Wand (11) vorsteht.

3. Lampenhalter nach Anspruch 2,
**dadurch gekennzeichnet, dass** die Rippe (13) zwischen der Befestigungsklammer (10) oder der der Befestigungsklammer gegenüberliegenden Wand (11) schräg verläuft.

4. Signalleuchte mit einem Sockel und einem auf diesem angebrachten Lampenhalter,
**dadurch gekennzeichnet, dass** der Lampenhalter (P) gemäß einem der Ansprüche 1 bis 3 ausgeführt ist.

## Claims

1. Motor-vehicle indicator-light lamp holder comprising an elastic fixing lug (10) intended to cooperate with complementary means on a base, **characterised in that** it comprises, between the fixing lug (10) and a rigid wall (11) opposite this lug (10), at least one intermediate element (13) having sufficient stiffness to oppose the closure of the said lug (10) during the stoving of the light and the orientation and sizing of this intermediate element (13) are chosen so that its stiffness is sufficiently low so that it allows itself to be bent during the mounting of the lamp holder on the base.

2. Lamp holder according to Claim 1, **characterised in that** the intermediate element (13) is a rib which extends so as to project with respect to the fixing lug (10) or the wall (11) opposite thereto.

3. Lamp holder according to Claim 2, **characterised in that** this rib (13) extends aslant between the fixing lug (10) or the wall (11) opposite thereto.

4. Indicator light comprising a base and a lamp holder mounted on the latter, **characterised in that** the lamp holder (P) is of the type according to one of Claims 1 to 3.
